# EUROPEAN PATENT APPLICATION

(11) **EP 0 854 616 A1**
(43) Date of publication of application: **22.07.1998**
(21) Application number: 97915717.9
(22) Date of filing: 14.04.1997
(51) Int. Cl.: H04L 12/44, H04L 13/00

(54) **COMMUNICATION DEVICE AND COMMUNICATION METHOD**

(30) Priority: 12.04.1996 JP 115364/96
(71) Applicant: Consultant Association Inc. Ltd., Kashiwa-shi, Chiba 277 (JP)
(72) Inventor: CHIBA, Takamitsu, Funabashi-shi, Chiba 274 (JP)
(74) Representative: Fréchède, Michel
(86) International application number: JP9701285
(87) International publication number: WO9739554

(57) **Abstract**

The present invention relates to communication device in network composed of one or more than one nodes. Each node contains management table for administering communication. The management table of node having lower node keeps node data of the lower node for specifying the node. And transmission address finding means that receives data transmitted from upper node or lower node and finds the node address for transferring the receiving data based on node address recorded in header of the data. When a node not being the highest node receives data from the lower node, it transmits the data to a lower node in case that the destination node address is recorded in the management table, or it transmits the data to a higher node in case that the destination node address is not recorded in the management table, when it receives data from a higher node, it transmits the data to a lower node in case that the destination node is recorded in the management table, or it disuses the data in case that the destination node address is not recorded, and when the highest nodes receives data it refers the management table, and in case that the destination node address is recorded in the management table, it transfers the data to a lower node, and disuses the data in case that the destination node address is not recorded in the management table. According to the present invention, multimedia data communication is realized by simple construction.

## Description

### Technical Field

The present invention relates to a communication device and communication method in a network.

Various networks like LAN or public network etc. are developed. Many kinds of multimedia communication like multimediadata of static image, moving image or voice etc., or communication of service for searching request are performed on the network. It is desired that a communication device which can treat all kinds of these communications on same network with a common method without depending to the media kind , service kind etc., and is composed as simply as possible. The present invention relates to a communication device which can realize such multimedia communication with a simple construction and good efficiency.

### Back ground of the invention

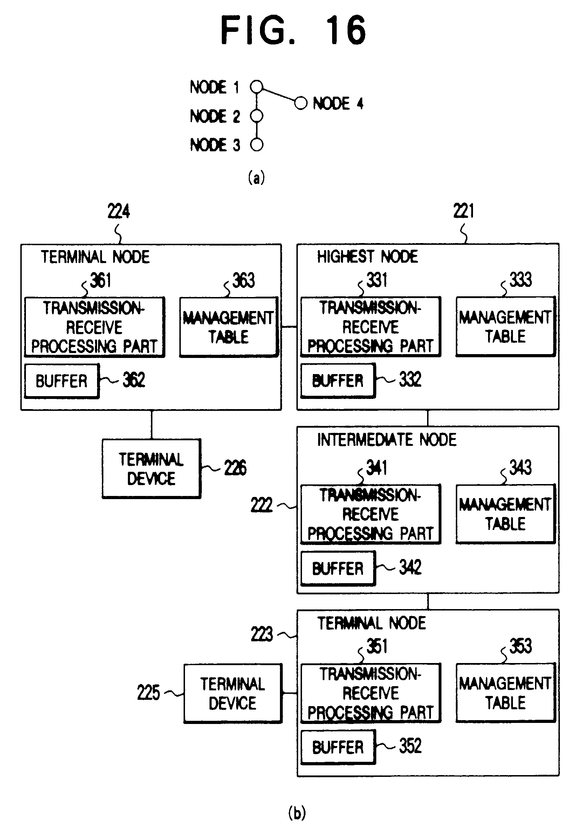

Figure 16 shows an illustrative explanation of prior art.

Figure 16 (a) shows an example of network, on which each communication device for executing communication is shown simply as a node. On the figure 16 (a), the highest node is a node 1, and each of a node 2 and a node 4 is connected under the node 1, and a node 3 is connected under the node 2. The node 3 and the node 4 are each the lowest node or a terminal node. The terminal node is the lowest node equipping only terminal device. The node 1 is PBX, host computer etc. for example. The node 2 is a middle node.

Figure 16 (b) shows a device composition of each node.

On figure 16 (b), a node 1 (221) is the highest node. A node 2 (222) is a middle node. A node 3 (223) is a terminal node. A node 4 (224) is a terminal node. Reference number 226 shows a terminal device of the terminal node 223.

Each of reference number 331, 341, 351, 361 shows transmission -receive processing part of each node. Each transmission -receive processing part equips multiplexing - demultiplexing unit (MUX) for multiplexing communication. Each of reference number 332, 342, 352, 362 is a buffer of each node. Each of reference number 333, 343, 353, 363 is a management table of each node.

At each node, the transmission - receive processing part receives data in the receiving buffer. And a sending address for transferring the received data is found by referring the management table and kept in the transmission buffer for sending the address. Transmission data multiplexed in the multiplexing -demultiplexing unit (MUX) (not shown) is output to the network, and received at the terminal node (for example node 3), and demultiplexed in the multiplexing-demultiplexing unit and out put to a printer or display etc..

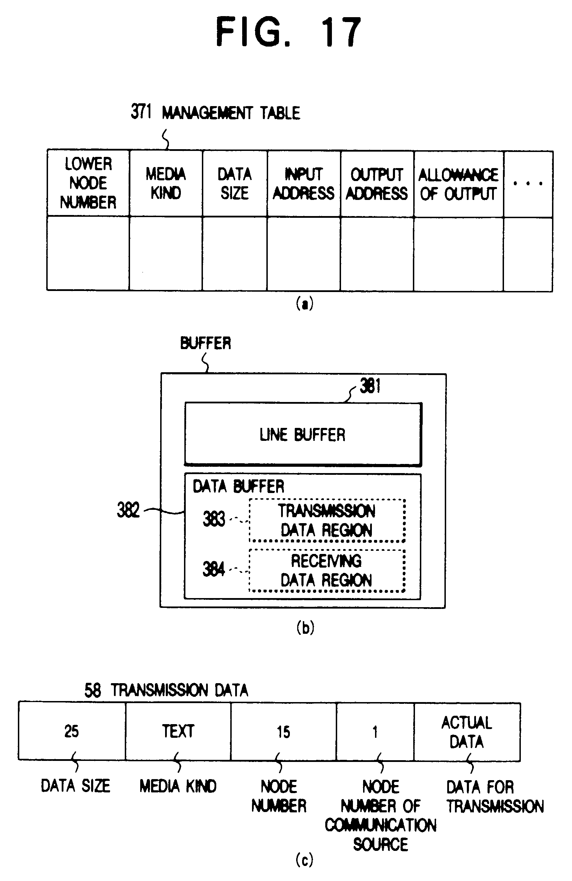

Figure 17 shows prior art data structure of the management table and the buffer.

Figure 17 (a) shows a management table structure.

The prior art management table 371 of each node records each lower node number, media kind ( static image, moving image, text data, voice etc.), data size, input address and output address for keeping the transmission and receive data buffer and a data for suggesting allowance or disallowance of output.

Figure 17 (b) shows the composition of the buffer. A network buffer 381 keeps the transmission and receive data of network. Data buffer 382 keeps transmission data and receiving data. Transmission region 383 keeps data temporarily in transmission processing. Receiving region 384 keeps temporarily data received from the network buffer 381 in receive processing.

Figure 17(c) shows prior art data composition. Prior art composition of transmission data 358 is that data order is fixed thereon, for example data size, media kind, node number of destination for transmission, transmission source node number and actual data of transmission object are arranged in this order fixed in advance. Figure 17 (c) shows a case that a data size is 25 bytes, a media kind is text data, a node number of transmission destination is fifteen, a communication source node number is one. The arrangement order is fixed and each value of these is formatted in order as shown in the figure 17 and transmitted. A node has received the data, it interprets meaning of the received data from arrangement order of item of the received data.

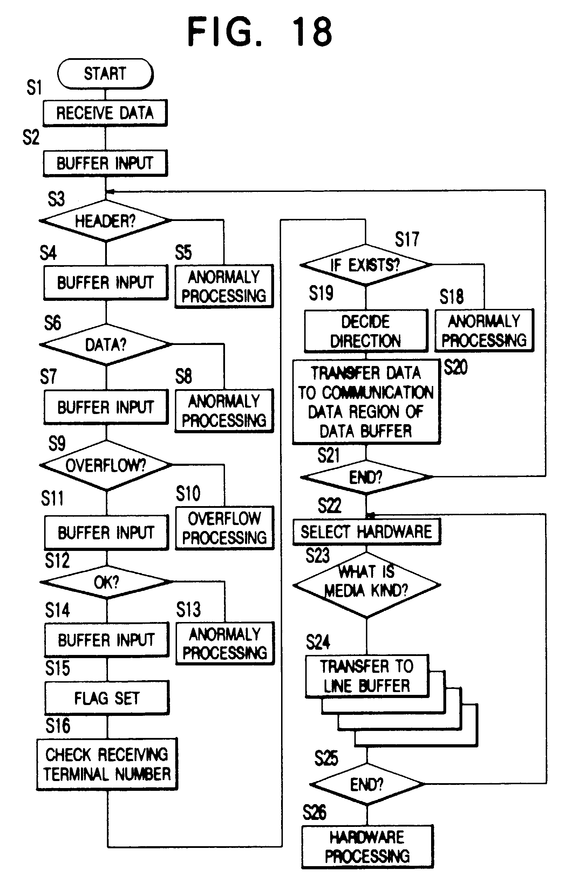

Figure 18 shows a flow chart of the prior art communication device.

At step 1 the communication device receives data from node 2. At step 2 the data is input into the receiving data region of the data buffer. At step 3 it is judged whether the data is header or the other data. When the judgment result of step 3 is header, at step 4 the data is input into the buffer, and when the judgment result at step 3 is not header, the data is treated as anomalous data.

At step 6 it is judged whether the data following after the header is data. When the judgment result of step 6 is not data, the data is treated as anomalous data, or when it is data, the data is input into the buffer at step 7. Step 9 is buffer processing, and at step 9 it is judged whether the data is overflowed from the buffer or not. When it is overflowed, overflow processing is executed (the overflow data is kept temporarily to the other buffer).

Step 11 - step 19 are header processing. When the judgment of step 9 is not that the data is not overflowed, transmission terminal node number T- NO is checked. When the judgment result is OK (correct), media kind is judged at step 14, it is not OK, anomalous processing is executed at step 13. When the judgment result of step 14 is OK, the media kind is acknowledged at step 13 and a flag showing the kind of media data is set. Next, at step 16 receive terminal number (T-NO) is checked When the judgment result is that the number exists, its destination (transferring direction) is decided, when the number does not exist, anomalous processing is executed at step 18.

The data in the buffer is transferred from the transmitting region to the receiving data region at step 20. It is judged at step 21 whether the data exists or not. When the data exists, each succeeding step after step 3 is repeated. When the data is ended at step 21, a hardware is selected at step 22. It is judged at step 23 whether the media can be used, when the media can be used, the data is transferred to the network buffer (the net work buffer is prepared for every each media). It is judged at step 25 whether data is ended, each step succeeding to the step 22 is repeated, and when it is ended, the data is treated in the hardware for each media kind.

In the process of the flowchart of figure 18, each node refers the management table in processing of transmission and receive. In the process it is checked whether lower node number (terminal node number T-NO)) exists or not, further data (attribute value) of terminal node number (T-NO) is read, media kind, data size, input address of buffer, allowance or disallowance of output are found, and output address for writing the data etc. are referred and checked

In the prior art of communication device, when the communication device receives the data, and multiplexes or demultiplexes the data for communication etc., it is necessary to keep the data temporarily in a buffer. Therefore, complex buffer data processes like data overflow processing etc. are necessary.

And also, in the prior art of communication device, the data format must be arranged fixedly for each node treating it, therefore the system is rigid and it is not easy to add or delete the node.

In the prior art of communication device, when data does not exists or communication becomes impossible by obstacle of communication, complex obstacle processing is necessary (for example, buffer data overflow processing, other processing for anomaly).

Further, in prior art communication device, the management table of each node must be made and fixed at the first start time of the system start.. Therefore, it is necessary to reconstruct the whole system in case of adding or deleting or changing the node.

This invention provides communication for network for the purpose thereof that can treat all kind of media on same network with a common method, and the composition is simple, the system reconstruction is not necessary in the case of adding or deleting the node etc..

### DISCLOSURE OF THE INVENTION

This invention relates to communication device and communication method of nodes on network which connects one or more than one nodes. The node of the network has a management table which administers the communication, and the management table keeps lower node data for specifying a lower node, when it has a lower node. The communication device has a finding destination means which receives data from a higher node or a lower node and decides transfer destination based on header of the data. When the node not being the highest node receives data from the lower node, it transmits the data to a lower node in case that the destination node is recorded in the management table, or it transmits the data to a higher node in case that the destination node is not recorded in the management table. When it receives data from a higher node, it transmits the data to a lower node in case that the destination node is recorded in the management table, or it disuses the data in case that the destination is not recorded in the management table. And when the highest nodes receives data, it refers the management table, and in case that the destination is recorded in the management table, it adds the intermediate node number on a root to the destination in case that the destination node is recorded in the management table, and disuses the data in case that the destination node is not recorded in the management table.

According to the present invention, various kinds of data can be sent together by a high speed transmission line with common method, and the composition is simple. Further the management table can be produced automatically, when the system is setup at first time. And moreover the management table may be renewed easily even in cases of addition or deletion or change of the node.

### BRIEF DESCRIPTION OF THE DRAWINGS

Figure 1 shows an illustrative explanation of a fundamental composition of the present invention.

Figure 2 shows an illustrative explanation of action of the fundamental composition of the present invention.

Figure 3 shows a preferred embodiment 1 of this invention.

Figure 4 shows an example of each node composition and a format of management table.

Figure 5 shows a composition of transmission -receive processing part.

Figure 6 shows a composition of a management table of the present invention.

Figure 7 shows a composition of a header of the present invention.

Figure 8 shows flowchart of transmission destination.

Figure 9 shows a network to apply the present invention.

Figure 10 shows an illustrative explanation of method for producing management table.

Figure 11 shows flowchart for setting each node number to each node.

Figure 12 shows an illustrative explanation of method for producing management table.

Figure 13 shows multimediadata communication method

Figure 14 shows an illustrative explanation of method for starting protocol.

Figure 15 shows communication method of service.

Figure 16 shows an illustrative explanation of prior art.

Figure 17 shows prior art of a management table, a buffer structure and data structure.

Figure 18 shows flowchart of prior art communication device.

### DISCLOSURE OF PREFERABLE EMBODIMENT

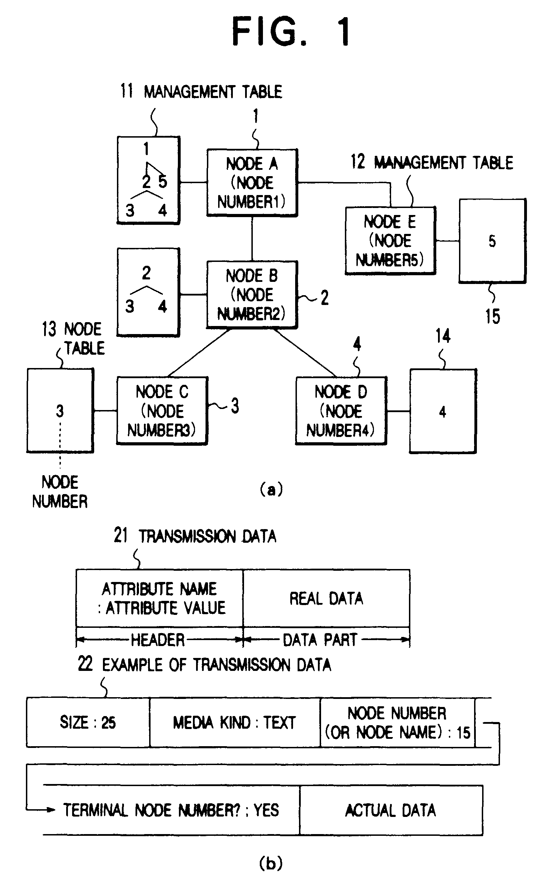

Figure 1 shows a fundamental composition of this invention. There are various cases for node data spying a node like node number, node name, network name etc., but in the following a case of node number (T-NO) is used for specifying node as an example.

In figure 1 (a), a node A (1) having number 1, a node B (2) having node number 2, a node C (3) having node number 3, a node D (4) having node number 4, a node E (5) having node number 5 are shown. A management table 11 of node A has node number of subordinate nodes (node number 2 and node number 5 under node number 1, node number 3 and node number 4 under node number 2. A management table 12 of node B has subordinate nodes (node number 3 and node number 4 under node number 2).

A management table 13 of node C, a management table 14 of node D, a management table 15 of node E are shown in figure 1 (b).

An example of data structure 21 of this invention is shown in figure 1 (b). The data composition of this invention is composed of attribute name, attribute value and data (actual data) etc..

An example of transmission data 22 are shown in figure 1 (b), and it shows that the data size is 25, media kind is text, destination node number is 15, symbol "YES" showing that the destination node is terminal node and actual data for transmission object.

As shown in figure 1 (a) as an example, the attribute value of the attribute name is 25, the attribute value of the media kind is text, the attribute value of node number is 15, the attribute value showing whether the node number T-NO is terminal node or not is "YES". In the present invention, pairs of attribute name and attribute value are sent.

Further according to both of header, which has attribute name and attribute value, and the management table composed like figure 1(a), a root for destination node can be found easily at each node. And by using a high speed transmission line of which allowance for sending data size is enough great for the data size, all data size of header and actual data can be sent without buffer in the present invention.

Referring to figure 1 (a), an action of data transmission from node C to node E for example is explained.

A header for addressing to node E is produced at node C and the header is added to data (actual data). And the data having header is transmitted to node B. The node B refers own management table, and acknowledges that the node E is not a lower node of node B, and because the data is directed to upper direction, the node B transmits the data to node A. The node A refers own management table, and in the case of example, as a direction node of the data is recorded in the manage table, node A transmits the data to the node E. The node E receives the data and outputs it.

Or for example, when the node B receives the data from A, and the data does not contain the lower node (node C ,node D) of the node B, the node B disuses the data.

Further, as the other case, when data is transmitted from node C to node D, node B receives the data from node C and transfers the data to node D, because node D is recorded in the management table of node B.

As mentioned above, when each node except the highest node receives the data from a lower node, each node refers management table, and transfers the received data for upper node direction in case that the direction node is not recorded in own management table, or transmits the data for a lower node in case that the direction node is recorded in own management table. And when each node except the highest node receives from a higher node, a node received the data transmits the data to a lower node in case that the direction node is recorded in own management table node, or it disuses the data in case that the direction node is not recorded in own management table. And when the highest node receives the data from a lower node, it refers the management table and obtains nodes on a root for the direction node, and adds the nodes to the received data. And the highest node transmits the data to a lower node. Or the highest node disuses the data in case that the direction node is not recorded in own management table.

Generally media a kind of received data is found and a processing device corresponding to the media kind must be started at each node. In the present invention, the media kind may be found easily from the attribute value (text, voice, static image etc..) of attribute name of header.

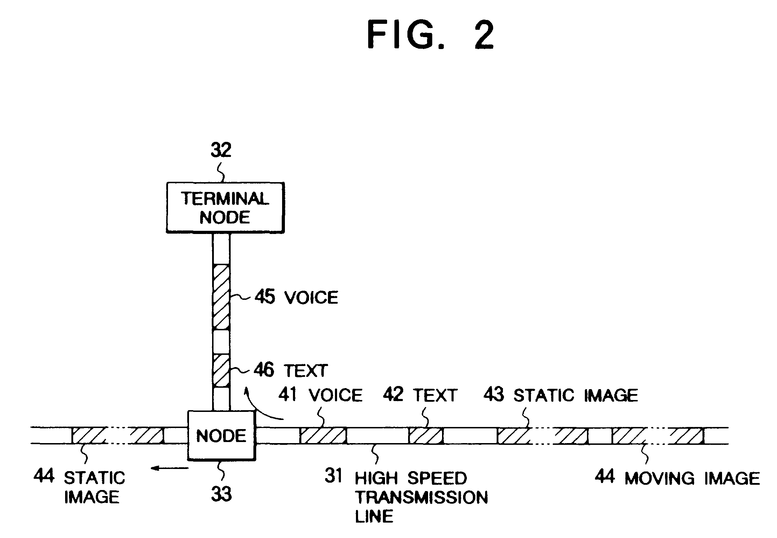

Referring Figure 2, action of fundamental composition of this invention is explained.

Figure 2 shows a principle for sending commonly multimediadata of voice, character, text, static image, moving image on a high speed transmission line by a common method. In figure 2, it is shown that each data is sent independently, actually each data is multiplexed as sending data.

In figure 2, a high speed transmission line 31 of 400Mbps, 1Gbps etc. for example, a terminal node 32, a node 33, voice data 41, text data 33, static data 43, moving data 44, voice data 45 separated at the node 33, static data 47 which has passed through node 33 are shown.

When multimedia data is transferred, transmission rate of 64 kbs for voice, 1.2∼ 28.8 kbps for character data, 1∼2Mbps for static image, 100Mbps for moving image are necessary. But a high speed transmission line of 400 Mbps, 1Gbps etc. for examples are sufficiently high speed and has great allowance margin for these transmission data, therefore, each media data can be transmitted by same transmission line commonly with a common method. Further all attribute value of media kind etc. can be found easily by header, therefore, as shown in figure 2, the media kind and the transmission direction of voice, text data, static image, moving image etc.. can be found easily from the header, and communication is realized with simple composition without receiving buffer, a transmission buffer etc., which are necessary in prior art, and the data can be transferred with high efficiency in the present invention.

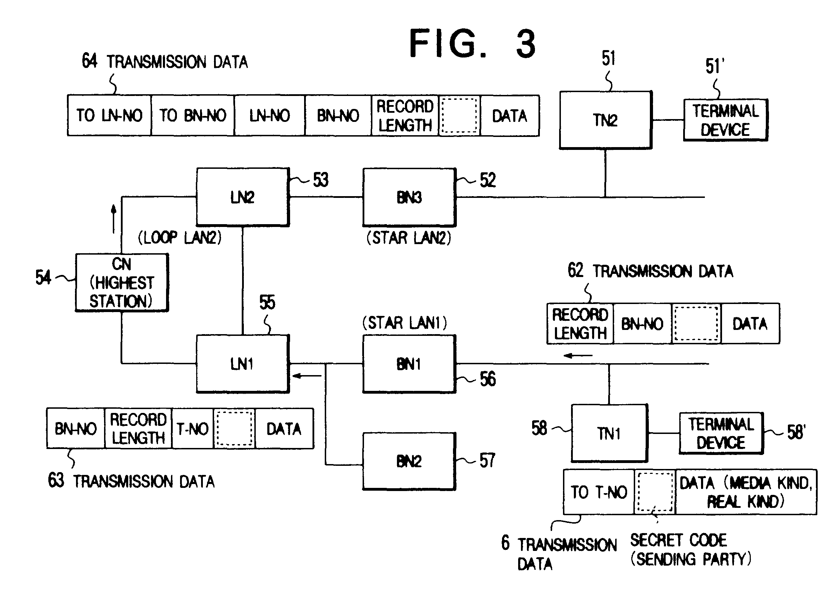

Figure 3 shows an embodiment 1.

Figure 3 shows a network connecting loop LAN (having LN1 (55), BN3 (52), CN54 as nodes ) and star LAN1 (having BN1, (56), BN2(57), TN1(58) as nodes) and star LAN2 (BN3(52), TN2 (51) as nodes).

In figure 3, TN2(51) is a terminal node and connects a terminal 58. LAN2(53) is an intermediate node. LN2(53) is an intermediate node and connects the star LAN2. CN4 is the highest node. LN1(55) is an intermediate node and connect star LAN1. BN1(56) is an intermediate node. BN2(57) is the lowest node (not having terminal device). TN1 (58) is a terminal node.

An example of a transmission data 61 produced at the terminal node (TN1), an example of data 62 which has passed through the terminal node (TN1) and added its transmission data length, an example of data 63 which has passed the node (BN1) 56 and added a node number of the passing node number BN-NO, an example of data 64 which has passed CN54 and added intermediate nodes number on passing root for the addressed node are shown.

The action of the network of figure 3 is explained in a case of example of data transmission from a terminal node (TN1) 58 to a terminal node (TN2) 51.
① Terminal node device 58' produces transmission data 61 addressing for terminal node (TN2) 51. The transmission data 61 is composed of actual data for sending and a header containing address node number (TN-NO), secret code, data kind. The data part of the transmission data 61 contains header data except the address node and the actual data to be sent.
② TN1(58) counts record length of transmission data 61 and produces data 62 by adding the record length to the transmission data 62, and transfers it to an intermediate node (BN1) 56. At BN1(56), the management table (not shown in figure 3 is referred for finding transmission address, and transmission data 63 that the transmission data of terminalnode number (T-NO) of BN1(56) is added to the transmission data 62 is produced. And the transmission data 63 is transmitted to an intermediate node LN1(55). At the intermediate node LN1 (55), its management table (not shown in figure 3, is referred and addressing node number is found and a node number of LN1 is added to the header and the transmission data is transmitted to CN 54. At the highest node (CN) 54, its management table (not shown in figure 3) is referred and intermediate nodes number LN2(53),BN3(52)) are added to the transmission data to produce transmission data 64, and the data 64 is transmitted to an intermediate node LN2(53). Further, at LN2 (53), referring its management table (not shown in figure 3), and transmitted to the node BN3(52). At BN3(52), its management table (not shown in figure 3) is referred and the data is transmitted to a node TN2 (51), and contents of the data are output at terminal node device 51'.

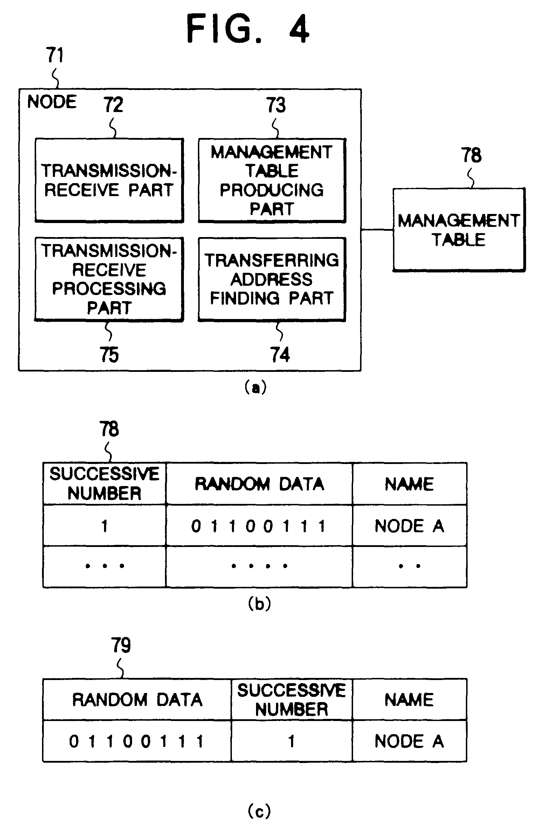

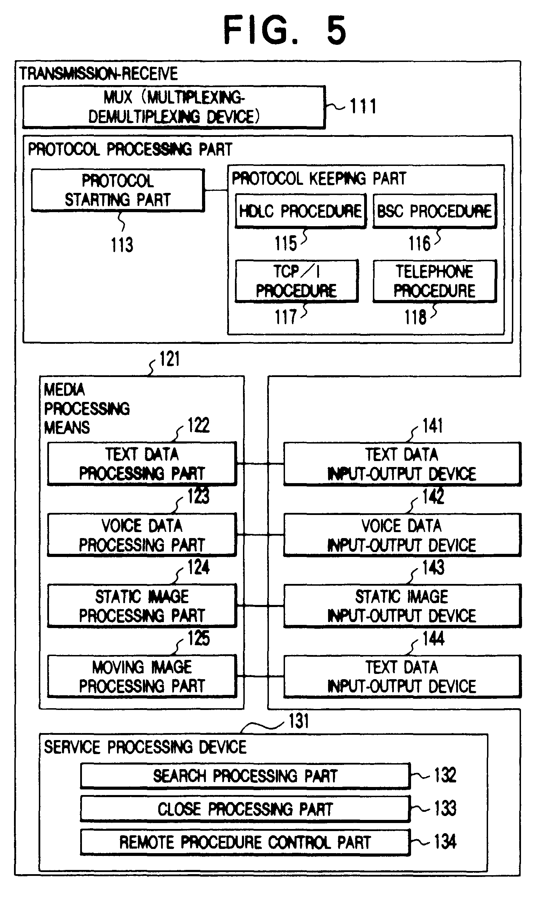

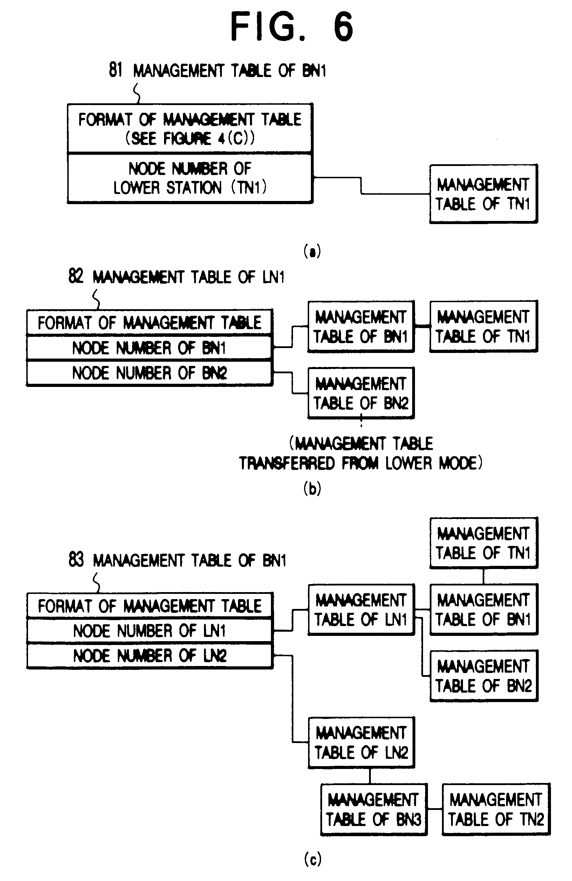

Figure 4 shows each node composition and a format of management table.

Figure 4 (a) shows the node composition. Node 71, transmitting - receiving part 72, management table producing part 73, transmission address finding part 74, transmission - receive processing part 75 and management table 78 are shown in the figure 4 (a). The management table 73 produces the management table 78 at the first starting time of the system, and renews the management table in time of addition, deletion or change of node. The transmission direction finding part 74 decides the transmission root for transmitting the received data.

Figure 4 (b) shows a format of the highest node (CN) for setting node number (successive number ) at the first starting time (the first time of activating the system ). The format 78 contains successive number T-NO of its subordinating node number, which corresponds to the above mentioned terminal number, random number occurred at each node and each node name.

Figure 4 (c) shows an example of a format of management table of each node (intermediate node, terminal node). The random number data occurred at own node, successive number from a center (CN) and the node name.

The successive node number is decided by the center node based on the random number occurred at each node. The detail method for finding the node number is explained later.

Figure 5 shows an example of composition of transmission - receive processing part.

In figure 5, multiplexing - demultiplexing device (MUX) 111, protocol processing part 112, protocol starting part 113, protocol keeping part 114, protocol of HDLC procedure 115, protocol of BSC procedure 116, protocol of TCP/I 117, telephone procedure 118 are shown.

Further, in figure 5, media processing means 121, text data processing part 122, voice data processing part 123, static image processing part 124 and moving image processing part 125 are shown.

Further, in figure 5, service processing part 131, searching processing part 132 which provides searching service for searching request, chase processing part 133, remote protocol procedure control part 134 which makes start a remote program are shown.

The chase processing part 133 is that references schedule of the other party of telephone and telephone to the scheduled place in case of no response for calling. Or it accesses to a pocket bell of the other party, and as the result, when the other party responses to own side, it connects the other party to the own side,

Further, in figure 5, text data input- output device 141, voice data input device 142, static image input - out put device 143, moving image input - output device 143 are shown,

In the composition of figure 5, the text data input-out put device 141, voice data input - output device 142, static image input - out put device 143 and moving image input-output device 144 are not absolutely necessary.

Figure 6 shows an example of composition of management table of the present invention.

Figure 6 (a), (b), (c) shows a composition of management table, and that is used in network of figure 3.

Figure 6 (a) shows a management table 81 of BN1 which has node number of own node (successive number T-NO), random number data, node name and node number (successive number T-NO) of a lower station (management table of BN2, BN3 has almost same composition also). It links a management table sent from the lower station (TN1) to own management table and keeps it

Figure 6 (b) shows an example of management table 82 of LN1 (that of LN2 is also same). It has node number of (successive number T-NO) of lower station BN1 and BN2, and has a copy of management table of lower node which is sent from the lower node, each is linked to the management table of the node.

Figure 6 (c) shows a composition of management table of integrating station (CN). The management table 83 has a node number of lower node LN and a management table sent from the lower node. Each management table is linked each other as shown the figure 3 (c).

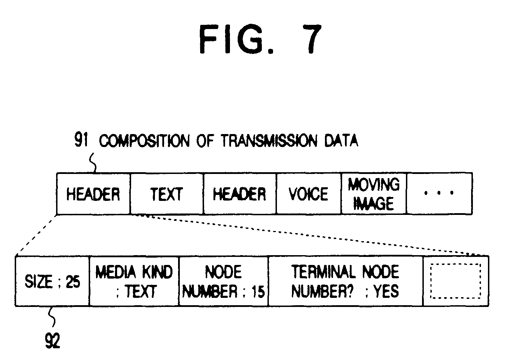

Figure 7 shows an example of header composition of the present invention.

In figure 7, a transmission data 9 is shown, and it shows for example a case for sending voice data, moving data in this order. Each data has header which records direction address of each data.

Header 92 shows its details, data size of 25, media kind of textdata, node number of address node of 15, information whether the address is terminal node number or not ("YES"), secret code of source node (random number) as examples.

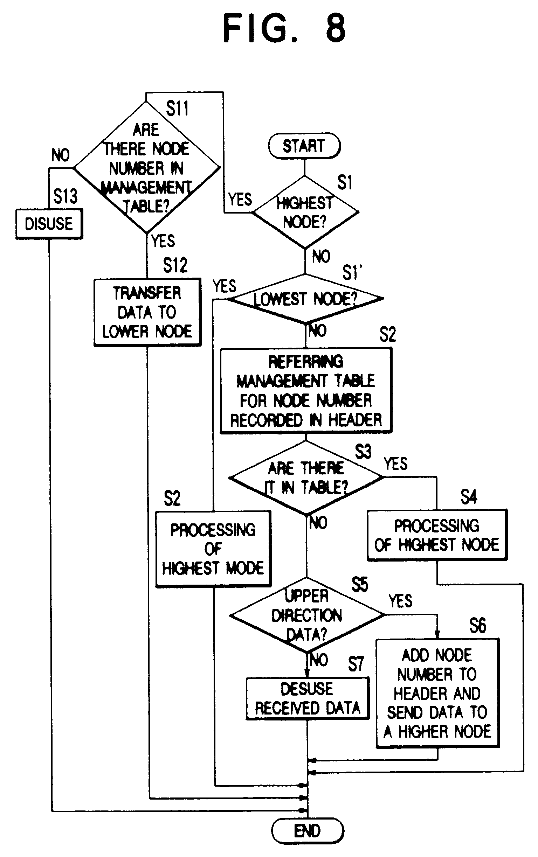

Figure 8 shows flow chart for finding root for destination.

This flow chart is common to each node.

At step 1 (S1), it is found whether a node is the highest or not. When the node is not the highest node at step 1, it is found whether the node is the lowest or not at step 1' (S 1'). When the node is the lowest node, as the decision of root for direction is not necessary, processing of the lowest node is executed at step 2' (S2'). Processing of the lowest node is that transmits received data to a higher node in case of transmission mode, and finds whether received data is addressed for own address in case of receiving mode, and outputs data addressed for own node.

When it is found that the node is not the lowest at step 1', it is found whether address of header is recorded in management table or not at step 2 (S2). When the node number is recorded in management table, the data is transmitted for the lower node in both case of upper direction data and lower direction data at step 4 (S4). When node number is not recorded in management table, it is found whether the data is for upper direction or not at step 5 (S5). The data is for upper direction at Step 5, it is transmitted for upper node, when the data is not for upper direction, the data is disused at step 7 (S7).

When the node is the highest at step 1, it is found whether the address is recorded in management table or not. When it is recorded in the management table, the highest node adds all intermediate node number on a root for the destination node, and transmits it to a lower node. When it is not recorded in the management table, the data is disused.

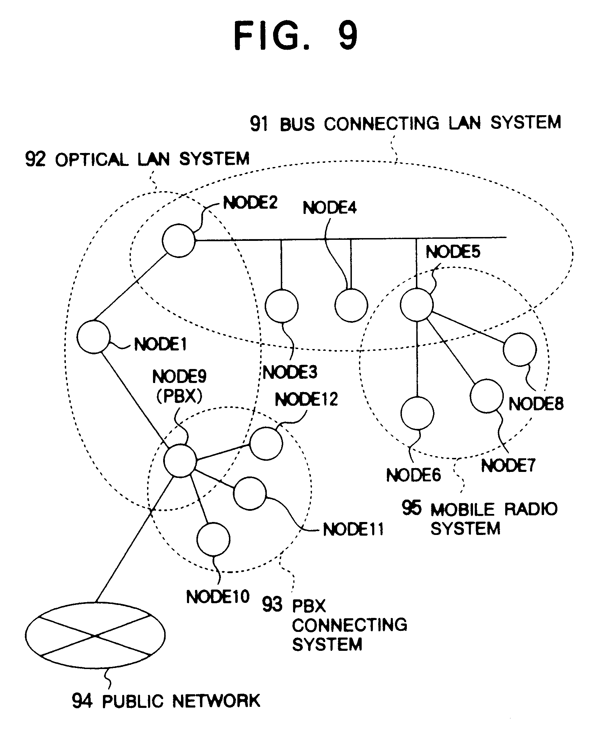

Figure 9 shows a network system to which the present invention is applied.

In figure 9, bus connecting LAN system 91', optical LAN system 92', PBX connecting system 93, public network 94, mobile communication system 95 which communicates through the bus connecting LAN system 91' are shown.

The bus connecting LAN system 91' is composed of node 2, node 3 and node 4, each is connected to the LAN system bus, node 5 connects subordinates nodes of node 6, node 7 and node 8 as shown in the figure.

Optical LAN system 92', is composed of node 1, node 2 and node 9 (PBX). Each node is connected with optical LAN cable.

PBX connecting system 93 is composed of node 9, node 11, node 12 and node 13. Each node of node 11, node 12, node 13 is connected to node 9 (PBX) as shown in the figure.

This invention is possible to apply to an independent system composed of only a LAN system or only a public system. Or the present invention is possible to apply to complex system composed of LAN and public network.

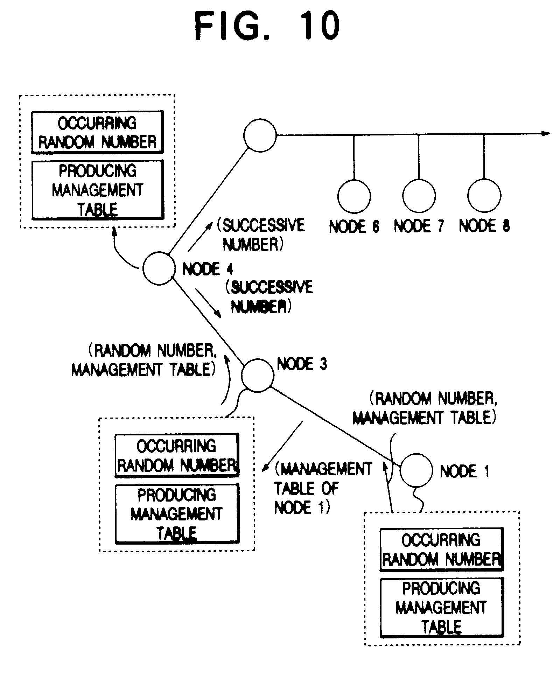

Figure 10 shows an illustrative explanation of producing method of management table.

In the present invention, the highest node (integrating node) sets automatically node data specifying node of net work (successive number of node number T-NO) based on the random number occurred by each node.

In the following, a case that the highest node sets automatically successive number of node number based on the random number occurred by each node is explained.

As shown in figure 10, it is supposed that each node is connected to a transmission line.

Node 4 is the highest node. Intermediate node 3 and node 5 are subordinate node of the highest node. Node 1 is a subordinate node of node 3. Node 6, node 7 and node 8 are subordinate node of node 5.

Each node contains a management table producing means. When the system is started initially, each node produces random number. Each random number is sent to the highest node 4. When each node sends the random number, the intermediate node (node 3, node 5) receives the random number of the lower node of each, and makes a format of management table (see figure 4 (c)). The highest node receives the random number sent from the lower node, and sets successive number based on the random number of each node on a format (see figure 4 (b)). And the successive number is transferred to subordinate node. The intermediate node which receives the successive number records the successive number corresponding to the random number in the format, and further sends it to the subordinate node. Each node executes these procedure, and as the result, management table at each node is produced.

In the above mentioned process, when the format of management table is produced, the intermediate node links the format of management table transmitted from the lower node to own format and produces a hierarchical structure of management table. And when the successive number is sent from the highest node later, the node records the successive number corresponding to the random number. And further the node records each node name sent from the lower node, which an operator has input for making up the management table.

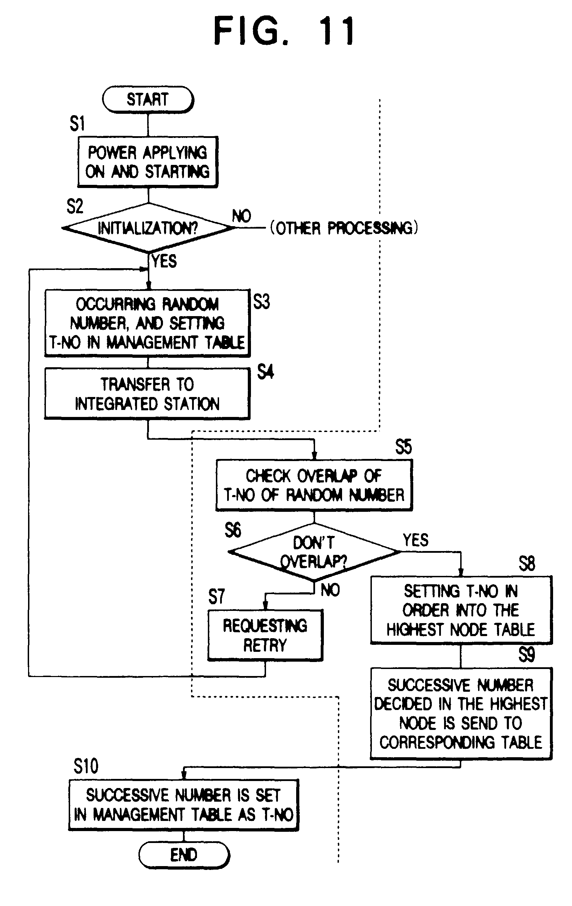

Figure 11 shows flowchart of setting method of successive number (T-NO) of each node.

Step 1 (S1), step 2 (S2), step 3 (S3), step 4 (S4), step 10 (S10) are node processing. Step 5 (S5), step 6 (S6), step 7 (S7), step 8 (S8), step 9 (S9) are processing of the highest node.

At step 1, power supply of node is started,. At step 2, it is found whether system initialization is executed or not, when the system initialization is executed, random number is occurred at step 3, node number (T-NO) is recorded in the management table. At step 2, when the system initialization does not execute, other processing is executed. At step 4, random number is transferred to the highest node.

At step 5 and step 6, the highest node checks whether T-NO of random number does not overlap or not. When the T-NO is overlap, it commands retry to each node at step 7. When it is found for T-NO not to be overlap at step 6, the T-NO of the random number are set in order in the table of the highest node at step 8. The successive number of which order is decided in the highest node is sent to corresponding node at step 9.

The successive number (T-NO) of node is set on the management table at step 10.

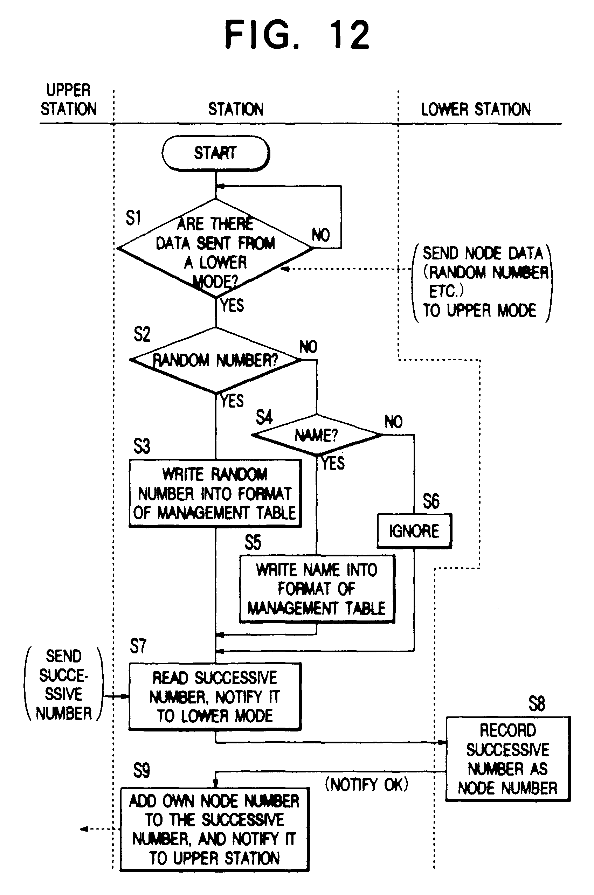

Figure 12 shows flow chart of management table producing.

It is found at step 1 (S1) whether a node data is received or not from a lower node. When the node data is received, it is found at step 2 (S2) whether the data is random number or not. When the data is random number, the random number is recorded in the format of management table at step 2. When the data is not random number at step 2, it is found at step 4 (S4) whether it is name or not. When the data is name, the name is recorded to the format of management table at step 5 (S5). The successive number corresponding to the name is transferred to the lower node. The lower node records the number in its management table. And "OK" showing normal receive is transferred for upper node. An upper node receiving the node number adds own node number to the node transferred number and sends the data (random number and the management table of lower station ).

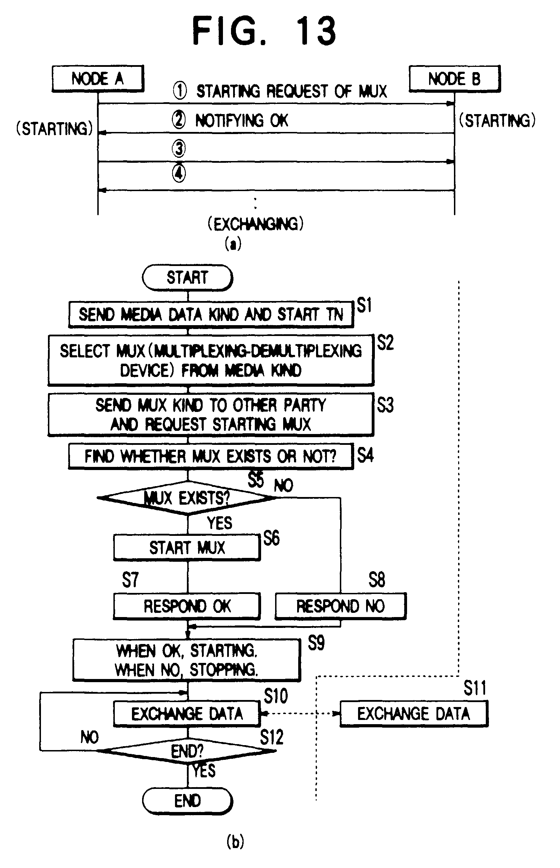

Figure 13 shows an illustrative explanation for media data communication method of the present invention.

The attribute name of header of the present invention may contain protocol kinds (BSC procedure, HDLC procedure, FAX procedure, telephone procedure etc.), service kind (searching, chase processing, remote program control etc.) other than the media kind.

Starting procedure of each case is explained in following.

Figure 13 (a) shows a case sending media data.

When multimediadata is sent from node A to node B, the node A request for starting program to send media kind. When the node B receives it normally, the node B sends "OK" to the node A. And both of node A and node B start the program for media the kinds. From node A to node B the media data is sent.

Figure 13 shows flowchart of communication method at each node of media kind.

Step 1 (S1), step 2 (S2), step 3 (S3), step 9 (S9), step 10 (S10), step 12 (S12) are processing of node A. At first, at step 1, a media kind is transmitted and a terminal node (TN) is started. At step 2, TN selects MUX (multiplexing - demultiplexing device ) based on the media kind. At step 3 a kind of the selected MUX is sent to the other party (node B ), nod A requests starting of MUX to node B. step 4 (S4), step 5 (S5), step 6 (S6), step 7 (S7), step 8 (S8), step 11 (S11) are processing of node B. At step 4, step 5, node B finds whether the MUX for which starting is requested exists or not therein. When it exist, the MUX requested for starting is started at step 6, and responses "OK" at step 7. At step 5, when the MUX requested for does not exist, "NO" is responded to node A.

At step 9, node A starts the MUX in response of receiving of the "OK". When the response is "NO", node A stops the process. At step 10 and step 11 data is exchanged between node A and node B. The exchange is executed up to the end of data. When the end of data is found at step 12, the exchange is ended.

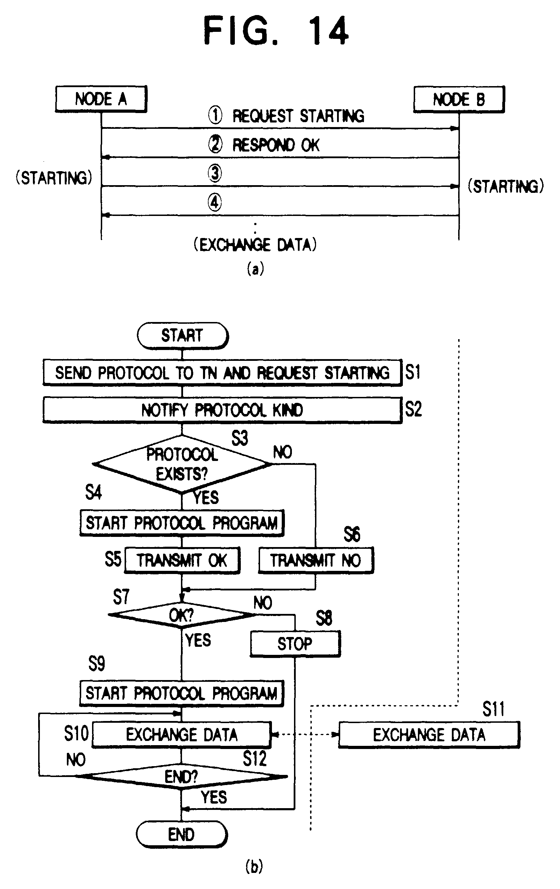

Figure 14 (a) shows starting method of protocol.

Request for starting protocol with designation of protocol kind is transmitted from node A to node B. When node B receives the request, node B responses "OK" to node A, and at both of node A and node B the designated protocol is started. And communication between node A and node B is commenced.

Figure 14 (b) shows flowchart for starting the protocol.

Step 1 (S1), step 2 (S2), Step 7 (S7), step 8 (S8), step 9 (S9), step 10 (S10), step 12 (S12) are processing of node A. Step 3 (S3), step 4 (S4), step 5 (S5), step 6 (S6), step 11 (S11) are processing of node B. Figure 14 (b) is flowchart of each node.

At first, at node A protocol data for requesting starting protocol is transmitted to TN of node A. Protocol kind is informed for the other party of communication ( a higher node or a lower node). Node B finds whether the requested protocol exist or not, the protocol is started in case of existence of the protocol. And node B transmits "OK" to node A. When the protocol does not exist at step 3, node B informs "NO" to node A.

At node A, it is found at step 7 whether the response from node B is "OK" or not, the protocol is started in case of "OK" at step 9. The communication is stopped in case of "NO" at step 8. The data exchange is executed between node A and node B at step 10, step 11. The exchange continues in ca se of existing of the data, and the exchange is finished, when the data end is found at step 12.

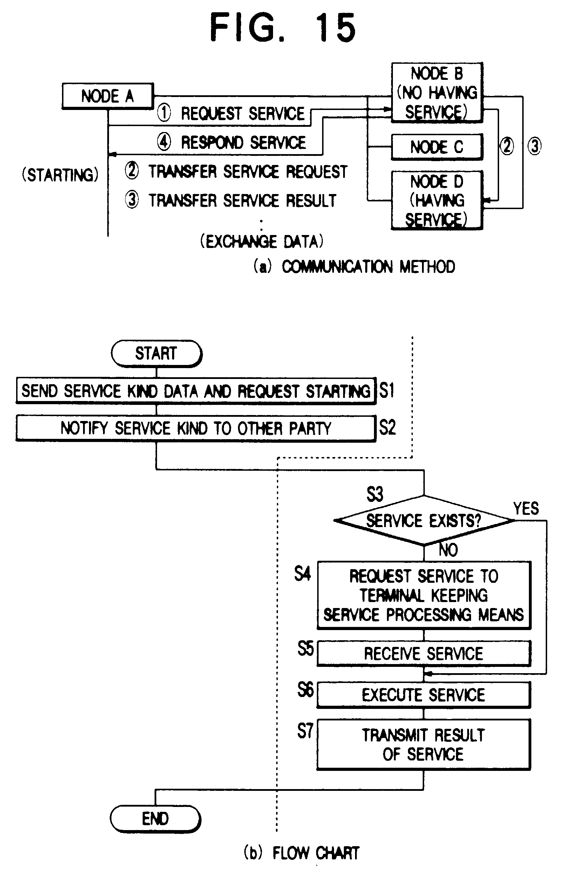

Figure 15 shows an illustrative communication method of case of service data and flowchart

Figure 15 (a) shows a case that node A transmits a service request (searching request etc.) to node B. It is supposed that the network of node A, node B and node D can communicate among them each other.

The service request is transmitted from the node A to the node B. When node B can execute the service, the node B executes the service, and transmits the result to the node A. When the node B can not execute the service, it asks to node C and node D whether they can executes the service. As the result, when node D has the executing means for the service, the node D transmits the executing program for the service to node B. The node B executes the service and sends the result to node A Or node B requests the service to node D, and node D executes the service, and the node D sends the result to node B, and node B sends the result sent from the node D to node A

Figure 15 (b) shows the flow chart of service communication program.
Step 1 (S1), step 2 (S2) are processing at node A. step 3 (S3),
step 4 (S4), step 5 (S5), step 6 (S6), step 7 (S7) are processing at node B.

At node A, the service kind data is sent to TN of node A and request for starting program with information of service kind to the other party of communication (node B). Node B finds whether the service means exists or not at step 3. When the service exists in node B, node B executes the service at step 6, and sends the result to the other party (node A) at step 7. When the service means does not exist in node B at step 3, node B requests to send the service means for node D which keeps the service means at step 4. Node B executes the service at step 6, and at step 7 sends the result to node A. When node B requests for the other party (node D) to execute the service, node B transfers the service request to node D at step 4, and the node (node D) which has received the service request executes the service, and the node B receives the result, and node B returns the service result to node A at step 7.

### INDUSTRIALLY APPLICABLE

According to the present invention, all kinds of data can be sent commonly by a common method on a high speed transmission line, and the construction of the system is simple. Further the management table can be produced automatically at initially starting of the system, and when a node is added, deleted or changed, the management table is renewed easily .

Therefore, the cost for multimedia network may be greatly reduced, and management administration is easy.

## Claims

1. Communication device in network composed of one or more than one nodes comprises:
each node contains management table for administering communication;
the management table of node having lower node keeps node data of the lower node for specifying the node;
transmission address finding means that receives data transmitted from a higher node or a lower node and finds the node address for transferring the receiving data based on node address recorded in header of the data;
when a node not being the highest node receives data from a lower node, it transmits the data to a lower node in case that the destination node address is recorded in the management table, or it transmits the data to a higher node in case that the destination node address is not recorded in the management table, when it receives data from a higher node, it transmits the data to a lower node in case that the destination node is recorded in the management table, or it disuses the data in case that the destination node address is not recorded, and when the highest nodes receives data, it refers the management table, and in case that the destination node address is recorded in the management table, it transfers the data to a lower node, and disuses the data in case that the destination node address is not recorded in the management table.

2. Communication device according to claim 1 comprising management table producing means: wherein
each node transmits the node data received from a lower node to a higher node, each node read the received data and produces own management table by using the received data, further adds own node data to the data, and the received data added own node data is sent to a higher node.

3. Communication method in network composed of one or more than one in characterized that each node contains management table for administering communication and transmission address finding means: wherein
the management table of a node having a lower node keeps node data of the lower node, and the transmission address finding means receives data transmitted from a higher node or a lower node and finds node address for transmitting the data based on address data recorded in a header;
when a node not being the highest node receives data from a lower node, the node transmits the data to a lower node in a case that the destination node address is recorded in the management table, or the node transmits the data to a higher node in case that the destination is not recorded in the management table;
when a node receives data from a higher node, the node transmits the data to a lower node in case that the destination node address received is recorded in the management table, or the node disuses the data in case that the destination node address is not recorded in the management table;
and when the highest nodes receives data, the node refers the management table, and in case that the destination node address is recorded in the management table, the node transfers to the data to a lower node, and disuses the data in case that the destination node address is not recorded in the management table.

4. Communication method according to claim 3 comprising management table producing step: wherein
each node transmits the node data received from a lower node to a higher node, each node reads the received data and produces own management table by using the received data, further adds own node data to the data, and the data added own node data is sent to a higher node.

5. Communication method according to claim 3 characterized in that
start of common protocol, media kind decision and service kind decision are executed between the nodes.

6. Communication method according to claim 3 or 5 characterized in that:
communication is started by deciding media kind treated between the nodes.

7. Communication method according to claim 3 or 5 characterized in that:
treating protocol between the communicating nodes is notified each other and the common protocol is started.

8. Communication method according to claim 6 characterized in that:
Treating protocol between the communicating nodes is notified each other and the common protocol is started.

9. Communication method according to claim 3 or 5 characterized in that:
node requests service to the other node, and the node accepting the service request executes the service.

10. Communication method according to claim 6 characterized in that:
a node requests service to the other node, and the node accepting the service request executes the service.

11. Communication method according to claim 9 characterized in that:
when the node accepted the service request cannot execute the service, the node searches the other node possible to execute the service, and the node requested the service receives the service means and executes the service, or the node requested the service transmits the service to the node possible to execute the service and the node requested the service receives the result of service execution from the node possible to execute the service.

12. Communication method according to claim 10 characterized in that:
. when the node accepting the service request cannot execute the service, the node searches the other node possible to execute the service, and the node requested the service receives the service means and executes the service, or the node requested the service transmits the service to the node possible to execute the service and the node requested the service receives the result of service execution from the node possible to execute the service.

## Amended claims

### Amended claims under Art. 19.1 PCT

In claim, 1 it is defined that communication device comprises a management table, the data transmission speed is sufficiently a high speed and the communication is possible without a transmission-receive buffer.
In claim 2, it is defined that management table producing means is comprised and its action is clarified.

In claim 3, it is defined that each communication device management table for managing communication is comprised at each node, and mater as a method invention is clarified. Further it is defined that the data transmission speed is sufficiently a high speed and the communication is possible without a transmission-receive buffer.

In claim 4, it is defined that the data added own node data is sent to a higher node.

Claim 5, claim 8, claim 10, claim 11 and claim 12 are unchanged.

It is added that claim 6, claim 7 and claim 9 are subjected to claim 4.

Claim 13, claim 14, claim 15, claim 16 and claim 17 are added newly.
